# EUROPÄISCHE PATENTSCHRIFT

(11) **EP 2 105 721 B1**
(45) Veröffentlichungstag und Bekanntmachung des Hinweises auf die Patenterteilung: **07.09.2011**
(21) Anmeldenummer: 09002811.9
(22) Anmeldetag: 27.02.2009
(51) Int. Cl.: G01M 13/02

(54) **Verfahren zum Überwachen von Betriebszuständen von Kraftfahrzeugen**
Method for monitoring operational states of motor vehicles
Procédé de surveillance d'états de fonctionnement de véhicules automobiles

(30) Priorität: 26.03.2008 DE 102008015604
(43) Veröffentlichungstag der Anmeldung: 30.09.2009
(73) Patentinhaber: Audi AG, 85045 Ingolstadt (DE)
(72) Erfinder: Scheffel, Torsten, 85051 Ingolstadt (DE)
(74) Vertreter: Lehle, Josef

(56) Entgegenhaltungen:
- EP-A1- 0 364 682
- DE-A1- 3 236 520

## Beschreibung

Die Erfindung betrifft ein Verfahren und eine Vorrichtung nach dem Oberbegriff des Patentanspruches 1 und des Patentanspruches 7.

Durch die DE 101 59 492 A1 beispielsweise ist es bekannt, Betriebszustände von Kraftfahrzeugen zu überwachen, indem das Drehverhalten der einzelnen Fahrzeugräder erfasst und auf Langzeitänderungen überwacht wird. Damit sollen Schäden oder nachteilige Veränderungen von Fahrwerksteilen wie Stoßdämpfer, Lagerbuchsen, etc. oder lose Karosserieteile erkannt und ggf. als Defekt angezeigt werden.

Aus der DE 32 36 520 A1 ist eine Einrichtung zum Anzeigen des Zustandes von Fahrzeugreifen bekannt. Mittels der Einrichtung kann der Reifendruck sowie die Profiltiefe des jeweiligen Fahrzeugreifens bestimmt werden.

Aufgabe der Erfindung ist es, ein Verfahren zum Überwachen von Betriebszuständen von Kraftfahrzeugen anzugeben, mit dem unzulässiger Verschleiß und ggf. Schäden von Differenzialen des Antriebssystems vermieden werden können. Ferner wird eine einfache und zweckmäßige Vorrichtung zur Durchführung des Verfahrens angegeben.

Die verfahrensgemäße Aufgabe wird mit den Merkmalen des Patentanspruches 1 gelöst. Vorteilhafte Weiterbildungen des Verfahrens und eine erfindungsgemäße Vorrichtung sind in den weiteren Patentansprüchen angeführt.

Erfindungsgemäß wird vorgeschlagen, dass zumindest die Abtriebsdrehzahlen des Differenziales und über einen Lenkwinkelsensor eine Geradeausfahrt des Kraftfahrzeuges erfasst und über ein Zeitintervall verglichen werden und dass bei über das Zeitintervall und bei Geradeausfahrt anliegender, oberhalb einer definierten Drehzahlschwelle liegender Differenzdrehzahl der Abtriebswellen ein Warnsignal generiert wird. Die Drehzahldifferenzschwelle ist dabei so gelegt, dass vor dem Auftreten von unzulässigem Verschleiß oder Schäden am Differenzial aufgrund von über einen längeren Zeitraum anliegender Ausgleichsdrehzahlen im Differenzial (z. B. an Ausgleichs- und Achskegelrädern und deren Lagerstellen) das Warnsignal erzeugt wird und somit eine Überprüfung des Antriebssystems veranlasst wird. Die besagten Drehzahldifferenzen an den Abtriebswellen können entstehen durch stark unterschiedlich abgefahrene oder sogar in ihrer Größe unterschiedlich montierte Reifen, ggf. in Verbindung mit unterschiedlichen Reifendrücken, oder ggf. durch unpassend verbaute Antriebsteile im Antriebssystem.

In kostengünstiger Weise kann dabei ein im Kraftfahrzeug vorhandenes, elektronisches Steuergerät (z. B. für ein Antiblockiersystem der Betriebsbremse) verwendet werden, in dem die Raddrehzahlen der angetriebenen Räder bereits erfasst und ausgewertet werden und das um die Funktion der Generierung eines Warnsignales erweitert wird. Insbesondere kann dazu das elektronische Steuergerät für ein im Kraftfahrzeug vorhandenes Fahrdynamik-Regelsystem (z. B. ESP ®) entsprechend erweitert werden. Damit entfallen nahezu jegliche zusätzliche Sensoren, da ein Lenkwinkelsensor und die Raddrehzahlsensoren ohnehin verbaut und elektronisch ausgewertet werden.

Eine Systemredundanz kann erzielt werden, wenn auch die Drehzahl der Eingangswelle des Differenziales erfasst und mit den Drehzahlen der Abtriebswellen verglichen wird. Da sich bei Geradeausfahrt diese Drehzahlwerte im Wesentlichen 1:1 verhalten, kann in einfacher Weise z. B. der Defekt eines Drehzahlsensors erkannt und z. B. in einen Fehlerspeicher des Steuergerätes abgelegt werden. Ferner könnte es ggf. vorteilhaft sein, über das Drehzahlspektrum der Eingangswelle eine variable Drehzahldifferenzschwelle der Abtriebswellen zu steuern.

Besonders vorteilhaft kann bei einem permanent allradangetriebenen Kraftfahrzeug das zwischen einem vorderen und einem hinteren Differenzial angeordnete Zwischenachsdifferenzial bzw. Längsdifferenzial überwacht werden, über das die gesamte Antriebsleistung des Antriebsaggregates des Kraftfahrzeuges läuft und bei dem übersetzungsbedingt höhere Differenzdrehzahlen auftreten. Werden die Drehzahlsignale von Raddrehzahlsensoren ausgewertet, so sind zweckmäßigerweise die Raddrehzahlen der Räder jeweils einer Achse zu mitteln oder zu addieren, um präzise Differenzdrehzahlen der Abtriebswellen des Längsdifferenziales zu erhalten.

Bevorzug wird jedoch des weiteren vorgeschlagen, dass unmittelbar die Abtriebsdrehzahlen der ein vorderes Achsdifferenzial und ein hinteres Achsdifferenzial antreibenden Abtriebswellen über Drehzahlsensoren direkt an den Abtriebswellen oder damit trieblich verbundener Bauteile erfasst werden. Damit kann eine noch präzisere Erfassung der Drehzahlwerte verwirklicht werden, weil die Abtriebswellen des Längsdifferenziales wie vorstehend ausgeführt mit einer deutlich höheren Drehzahl als die Räder des Kraftfahrzeuges umlaufen.

Zur Erzielung einer baulich und fertigungstechnisch günstigen Vorrichtung wird ferner vorgeschlagen, dass ein elektronisches Steuergerät vorgesehen ist, das mit Drehzahlsensoren der Abtriebswellen des Differenziales oder des Längsdifferenziales verbunden ist, dass ferner ein Lenkwinkelsensor der Lenkung des Kraftfahrzeuges mit dem Steuergerät verbunden ist und dass die Signale dieser Sensoren verglichen und bei Vorliegen einer definierten Drehzahldifferenz bei Geradeausfahrt und nach einem definierten Zeitintervall das Steuergerät ein Warnsignal generiert.

Bevorzugt kann als Steuergerät ein im Kraftfahrzeug vorhandenes elektronisches Steuergerät eines Fahrdynamik-Regelsystems verwendet sein.

Schließlich kann das Differenzial oder Längsdifferenzial des Antriebssystems ein selbstsperrendes Torsendifferenzial sein, bei dem eine Überwachung der Drehzahlen der Abtriebswellen in vorteilhafter Weise unzulässige Verschleißerscheinungen vermeiden kann.

Zwei Ausführungsbeispiele der Erfindung sind im Folgenden mit weiteren Einzelheiten näher erläutert. Die schematische Zeichnung zeigt in:
- Fig. 1: ein Antriebssystem für ein allradgetriebenes Kraftfahrzeug mit einer Vorrichtung zur Überwachung in dessen Längsdifferenzial ggf. auftre- tender, abtriebsseitiger Differenzdrehzahlen und einem elektronischen Steuergerät zur Generierung eines Warnsignales; und
- Fig. 2: das als Torsendifferenzial ausgeführte Längsdifferenzial gemäß Fig. 1 in raumbildlicher Darstellung, jedoch mit an der Eingangswelle und an den Abtriebswellen unmittelbar angeordneten Drehzahlsensoren und einem damit verbundenen, elektronischen Steuergerät.

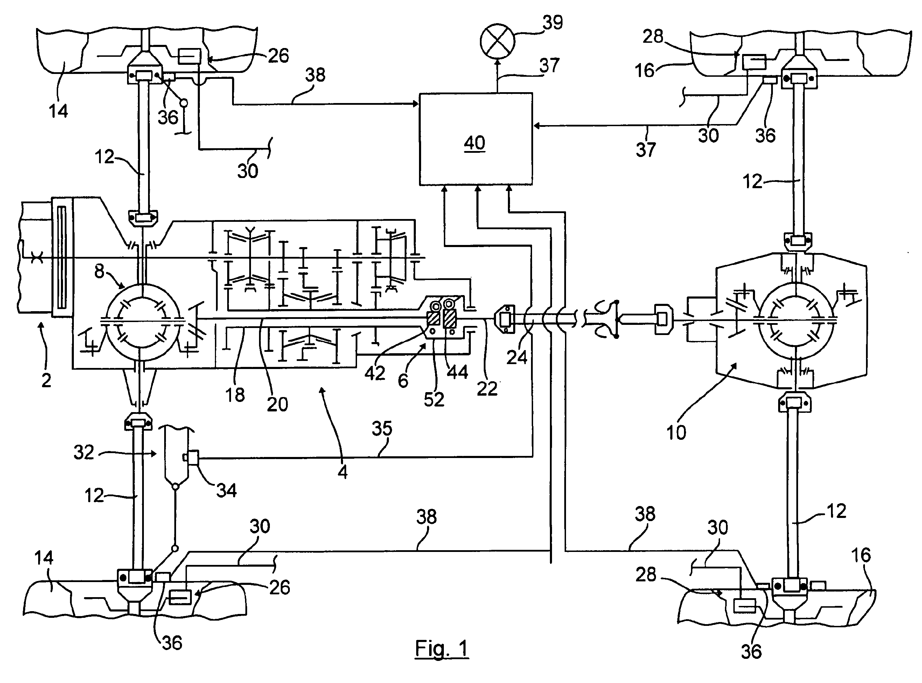

Das in Fig. 1 dargestellte Antriebssystem für ein allradgetriebenes Kraftfahrzeug setzt sich im wesentlichen aus einer antreibenden Brennkraftmaschine 2, einem nachgeschalteten Geschwindigkeits-Wechselgetriebe 4, einem als selbstsperrendes Torsen-Differenzial ausgeführten Längsdifferenzial 6 und den Achsdifferenzialen 8, 10 zusammen, wobei die Achsdifferenziale 8, 10 über Gelenkwellen 12 die Vorderräder 14 und die Hinterräder 16 des Kraftfahrzeuges antreiben.

Das Torsen-Differenzial 6 wird über eine hohle Eingangswelle 18 des Wechselgetriebes 4 angetrieben. Dieses verteilt den Kraftfluss über eine erste, durch die Eingangswelle 18 rückgeführte Abtriebswelle 20 zum vorderen Achsdifferenzial 8 und über eine zweite Abtriebswelle 22 und eine äußere Kardanwelle 24 auf das hintere Achsdifferenzial 10.

An einem jeden Rad 14, 16 sind hydraulisch betätigbare Scheibenbremsen 26, 28 vorgesehen, deren Druckmittelleitungen 30 (nur angedeutet) mit einem nicht dargestellten Bremssystem des Kraftfahrzeuges verbunden sind.

Desweiteren sind an einem jeden Rad 14, 16 in an sich bekannter Weise Raddrehzahlsensoren 36 angeordnet, die über elektrische Leitungen 38 Drehzahlsignale bzw. Winkelgeschwindigkeiten an ein elektronisches Steuergerät 40 liefern.

Die vorderen Räder 14 des Kraftfahrzeuges sind mittels einer nur teilweise dargestellten Zahnstangenlenkung 32 lenkbar, wobei an dem Gehäuse der Zahnstangenlenkung 32 ein Lenkwinkelsensor 34 angeordnet ist, der ebenfalls über eine elektrische Leitung 35 mit dem Steuergerät 40 verbunden ist.

Das elektronische Steuergerät 40 ist mit weiteren, nicht dargestellten Sensoren zur Erfassung fahrdynamisch relevanter Parameter verbunden und verarbeitet in bekannter Weise diese Daten zur Erzielung einer Fahrdynamik-Regelung (z. B. mit der Bezeichnung ESP ®) des Kraftfahrzeuges u. a. mit regelungstechnischem Eingriff in das Bremssystem und in die Leistungssteuerung der Brennkraftmaschine 2.

Darüber hinaus sind die Daten der Raddrehzahlsensoren 36 und des Lenkwinkelsensors 34 derart logisch verknüpft, dass bei oberhalb einer definierten Differenzdrehzahlschwelle der Raddrehzahlen der Vorderräder 14 zu den Raddrehzahlen der Hinterräder 16 und bei über den Lenkwinkelsensor 34 ermittelter, zumindest näherungsweiser Geradeausfahrt des Kraftfahrzeuges ein Warnsignal über eine elektrische Leitung 37 und eine optische Warnanzeige bzw. Warnleuchte 39 abgegeben wird, wenn diese Differenzdrehzahlschwelle und die Geradeausfahrt über ein definiertes Zeitintervall vorliegen.

Es versteht sich, dass bei der Auswertung der Raddrehzahlsignale der Raddrehzahlsensoren 36 die Drehzahlwerte der Räder 14 bzw. 16 jeweils einer Achse bevorzugt zu mitteln oder addiert zu verarbeiten sind, um genaue Drehzahldifferenzen der Abtriebswellen 20, 22 des Torsen-Differenziales 6 zu erhalten.

Das Warnsignal mittels der Warnleuchte 39 kann in einer Halteschaltung solange anliegen, bis das Kraftfahrzeug stillgesetzt (Unterbrechung des Zündstromes) ist. Danach kann die Überwachung erneut gestartet werden. Ferner kann das Warnsignal in einem Fehlerspeicher des Steuergerätes 40 abgelegt und demzufolge jederzeit in einer Kundendienst-Werkstatt ausgelesen werden.

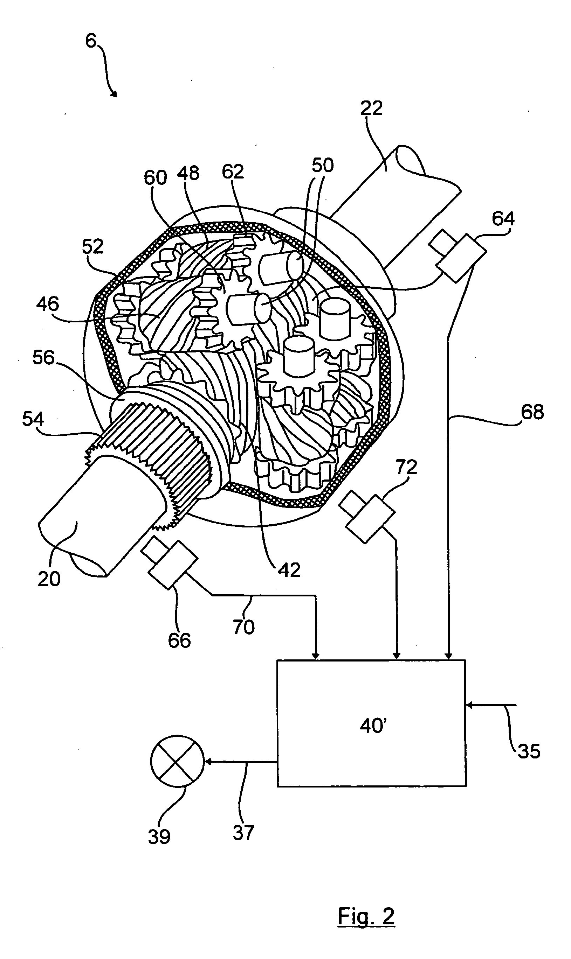

Die Fig. 2 zeigt vereinfacht eine alternative Vorrichtung zur Überwachung der Differenzdrehzahlen der Abtriebswellen 20, 22 des Torsen-Differenziales 6.

Das Torsen-Differenzial 6 weist in bekannter Weise zwei Schnecken 42, 44 auf, welche mit jeweils drei umfangsmäßig verteilten Schneckenräderpaaren 46, 48 in Eingriff sind. Die Schneckenräderpaare 46, 48 sind über Bolzen 50 in dem Ausgleichsgehäuse 52 des Differenziales 6 drehbar gelagert. Die Schnekken 42, 44 und die Schneckenräder 46, 48 bilden je ein Schneckengetriebe, welches in der Antriebsrichtung selbsthemmend wirkt. Die Schneckenräderpaare 46, 48 sind über Stirnzahnräder 60, 62 trieblich miteinander verbunden.

Der Antrieb des Ausgleichsgehäuses 52 des Torsen-Differenziales 6 erfolgt über die Eingangswelle 18 (vgl. Fig. 1), die über eine Kerbverzahnung 54 eines Wellenstummels 56 mit dem Ausgleichsgehäuse 52 drehfest verbunden ist. Von dort verteilt sich der Antriebsfluss in bekannter Weise über die eine Schnecke 42 auf die Abtriebswelle 20 und über die zweite Schnecke 44 auf die Abtriebswelle 22.

An den Abtriebswellen 20, 22 sind Drehzahlsensoren 64, 66 in dem umgebenden Getriebegehäuse des Wechselgetriebes 4 eingesetzt, die unmittelbar die Drehzahlen der Abtriebswellen 20, 22 erfassen und über elektrische Leitungen 68, 70 dem elektronischen Steuergerät 40' zuführen. Ferner wird über einen weiteren, im Wechselgetriebe 4 angeordneten Drehzahlsensor 72 die Drehzahl der Eingangswelle 18 bzw. des mit der Eingangswelle 18 drehfest verbundenem Ausgleichsgehäuses 52 des Torsen-Differenziales 6 ermittelt und dem Steuergerät 40' über die Leitung 74 zugeführt.

In dem Steuergerät 40', das im übrigen baugleich zum vorbeschriebenen Steuergerät 40 sein kann, werden anstelle der Raddrehzahlwerte die weit höheren Drehzahlwerte der Abtriebswellen 20, 22 entsprechend verglichen und bei Überschreiten einer vorgegebenen Differenzdrehzahlschwelle und bei Geradeausfahrt des Kraftfahrzeuges (erkannt über den Lenkwinkelsensor 34 mit der Signalleitung 35) und nach Verstreichen eines definierten Zeitintervalles über die Leitung 37 die Warnleuchte 39 angesteuert.

Zudem werden im Steuergerät 40' ständig die Drehzahlwerte der Drehzahlsensoren 64, 66 an den Abtriebswellen 20, 22 mit den Drehzahlwerten des Drehzahlsensors 72 an der Eingangswelle 18 bzw. am Ausgleichsgehäuse 52 verglichen und eine Plausibilitätsprüfung durchgeführt. Das Steuergerät 40' kann somit in einfacher Weise erkennen, ob ggf. ein Drehzahlsensor 64, 66 oder 72 defekt ist oder falsche Werte liefert und kann eine derartige Fehlfunktion in einen Fehlerspeicher des Steuergerätes 40' ablegen.

Liegt keine Geradeausfahrt des Kraftfahrzeuges vor, so ist die beschriebene Überwachungsschaltung inaktiv und das Längsdifferenzial 6 kann in üblicher Weise seine Ausgleichsfunktion mit unterschiedlichen Abtriebsdrehzahlen ausüben. Auch ein ggf. auftretender Radschlupf eines oder mehrerer der Räder 14, 16 bleibt ohne Reaktion, weil ein derartiger Radschlupf regelmäßig unterhalb des definierten Zeitintervalles liegt.

Die Erfindung ist nicht auf das dargestellte Ausführungsbeispiel beschränkt. Anstelle der Überwachung des Längsdifferenziales bzw. Torsen-Differenziales 6 oder zusätzlich dazu kann das Verfahren auch auf das Vorderachsdifferenzial 8 und/oder das Hinterachsdifferenzial 10 entsprechend angewendet sein. Dazu werden dann die Drehzahlwerte der Raddrehzahlsensoren 36 an den Vorderrädern 14 und/oder an den Hinterrädern 16 verfahrensgemäß ausgewertet.

## Patentansprüche

1. Verfahren zum Überwachen eines Betriebszustandes eines Differenzials (6), das in einem Kraftfahrzeug-Antriebssystem zumindest ein Antriebsmoment auf die angetriebenen Räder (14, 16) verteilt, **dadurch gekennzeichnet, dass** zumindest die Abtriebsdrehzahlen des Differenziales (6) und über einen Lenkwinkelsensor (34) eine zumindest annähernde Geradeausfahrt des Kraftfahrzeuges erfasst und über ein Zeitintervall verglichen werden, und dass bei über das Zeitintervall und bei Geradeausfahrt anliegender, oberhalb einer definierten Drehzahlschwelle liegender Differenzdrehzahl der Abtriebswellen (20, 22) ein Warnsignal generiert wird, mit dem eine Beschädigung oder ein Verschleiß am Differenzial (6) erkennbar ist.

2. Verfahren nach Anspruch 1, **dadurch gekennzeichnet, dass** ein im Kraftfahrzeug vorhandenes, elektronisches Steuergerät (40; 40') verwendet wird, in dem die Raddrehzahlen der angetriebenen Räder (14, 16) bereits erfasst und ausgewertet werden und das um die Funktion der Generierung eines Warnsignales erweitert wird.

3. Verfahren nach den Ansprüchen 1 und 2, **dadurch gekennzeichnet, dass** ein elektronisches Steuergerät (40; 40') für ein im Kraftfahrzeug vorhandenes Fahrdynamik-Regelsystem entsprechend erweitert wird.

4. Verfahren nach einem der vorhergehenden Ansprüche, **dadurch gekennzeichnet, dass** die Drehzahl der Eingangswelle (18) des Differenziales (6) erfasst und mit den Drehzahlen der Abtriebswellen (20, 22) verglichen wird.

5. Verfahren nach einem der vorhergehenden Ansprüche, **dadurch gekennzeichnet, dass** bei einem permanent allradangetriebenen Kraftfahrzeug das zwischen einem vorderen und einem hinteren Differenzial (8, 10) angeordnete Längsdifferenzial (6) überwacht wird.

6. Verfahren nach Anspruch 5, **dadurch gekennzeichnet, dass** die Abtriebsdrehzahlen der ein vorderes Achsdifferenzial (8) und ein hinteres Achsdifferenzial (10) antreibenden Abtriebswellen (20, 22) des Längsdifferenziales (6) über Drehzahlsensoren (64, 66) erfasst werden.

7. Vorrichtung zur Durchführung des Verfahrens nach einem der vorhergehenden Ansprüche, **dadurch gekennzeichnet, dass** ein elektronisches Steuergerät (40; 40') vorgesehen ist, das mit Drehzahlsensoren (36; 64, 66) der Abtriebswellen (20, 22) des Differenziales oder Längsdifferenziales (6) verbunden ist, dass ferner ein Lenkwinkelsensor (34) der Lenkung (32) des Kraftfahrzeuges mit dem Steuergerät (40; 40') verbunden ist und dass die Signale dieser Sensoren (36; 64, 66) verglichen und bei Vorliegen einer definierten Drehzahldifferenz bei Geradeausfahrt und über ein definiertes Zeitintervall das Steuergerät (40; 40') ein Warnsignal generiert.

8. Vorrichtung nach Anspruch 7, **dadurch gekennzeichnet, dass** als Steuergerät ein im Kraftfahrzeug vorhandenes elektronisches Steuergerät (40; 40') eines Fahrdynamik-Regelsystems verwendet ist.

9. Vorrichtung nach Anspruch 7 oder 8, **dadurch gekennzeichnet, dass** das Differenzial oder Längsdifferenzial des Antriebssystems ein selbstsperrendes Torsen-Differenzial (6) ist.

## Claims

1. Method for monitoring an operating state of a differential (6) which, in a motor vehicle drive system, distributes at least one drive torque to the driven wheels (14, 16), **characterized in that** at least the drive output rotational speeds of the differential (6) and, by means of a steer angle sensor (34), at least approximate straight-ahead travel of the motor vehicle are measured and compared over a time interval, and **in that**, if a differential rotational speed of the drive output shafts (20, 22) lies above a defined rotational speed threshold over the time interval and during straight-ahead travel, a warning signal is generated by means of which damage to or wear of the differential (6) can be identified.

2. Method according to Claim 1, **characterized in that** use is made of an electronic control unit (40; 40') which is provided in the motor vehicle and in which the wheel rotational speeds of the driven wheels (14, 16) are already measured and evaluated and which is expanded to include the function of generating a warning signal.

3. Method according to Claims 1 and 2, **characterized in that** an electronic control unit (40; 40') for a driving dynamics regulating system provided in the motor vehicle is correspondingly expanded.

4. Method according to one of the preceding claims, **characterized in that** the rotational speed of the input shaft (18) of the differential (6) is measured and compared with the rotational speeds of the drive output shafts (20, 22).

5. Method according to one of the preceding claims, **characterized in that**, in the case of a vehicle with permanent all-wheel drive, the longitudinal differential (6) arranged between a front and a rear differential (8, 10) is monitored.

6. Method according to Claim 5, **characterized in that** the drive output rotational speeds of the drive output shafts (20, 22), which drive a front axle differential (8) and a rear axle differential (10), of the longitudinal differential (6) are measured by means of rotational speed sensors (64,66).

7. Device for carrying out the method according to one of the preceding claims, **characterized in that** an electronic control unit (40; 40') is provided which is connected to rotational speed sensors (36; 64, 66) of the drive output shafts (20, 22) of the differential or longitudinal differential (6), **in that** furthermore a steer angle sensor (34) of the steering system (32) of the motor vehicle is connected to the control unit (40; 40'), and **in that** the signals of said sensors (36; 64, 66) are compared, and if a defined rotational speed difference is present during straight-ahead travel and over a defined time interval, the control unit (40; 40') generates a warning signal.

8. Device according to Claim 7, **characterized in that** an electronic control unit (40; 40'), provided in the vehicle, of a driving dynamics regulating system is used as a control unit.

9. Device according to Claim 7 or 8, **characterized in that** the differential or longitudinal differential of the drive system is a self-locking Torsen differential (6).

## Revendications

1. Procédé de surveillance d'un état de fonctionnement d'un différentiel (6) qui, dans un système d'entraînement de véhicule automobile, distribue au moins un couple d'entraînement aux roues motrices (14, 16), **caractérisé en ce qu'**au moins les vitesses de rotation d'entraînement du différentiel (6) et, par le biais d'un capteur d'angle de direction (34), un déplacement au moins approximativement rectiligne du véhicule automobile sont détectés et comparés sur un intervalle de temps, et **en ce qu'**en présence d'une vitesse de rotation différentielle des arbres de sortie (20, 22) qui est supérieure à un seuil de vitesse de rotation défini sur l'intervalle de temps et lors d'un déplacement rectiligne, un signal d'alerte est généré, lequel permet d'identifier un endommagement ou une usure au niveau du différentiel (6).

2. Procédé selon la revendication 1, **caractérisé par** l'utilisation d'un contrôleur électronique (40; 40') présent dans le véhicule automobile, dans lequel les vitesses de rotation de roue des roues motrices (14, 16) sont déjà détectées et interprétées, et qui est étendu de la fonction de génération d'un signal d'alerte.

3. Procédé selon les revendications 1 et 2, **caractérisé en ce qu'**un contrôleur électronique (40 ; 40') est étendu en conséquence pour un système de régulation dynamique de la conduite présent dans le véhicule automobile.

4. Procédé selon l'une des revendications précédentes, **caractérisé en ce que** la vitesse de rotation de l'arbre d'entrée (18) du différentiel (6) est détectée et comparée avec les vitesses de rotation des arbres de sortie (20, 22).

5. Procédé selon l'une des revendications précédentes, **caractérisé en ce que** sur un véhicule automobile à transmission intégrale permanente, le différentiel longitudinal (6) disposé entre un différentiel avant et un différentiel arrière (8, 10) est surveillé.

6. Procédé selon la revendication 5, **caractérisé en ce que** les vitesses de rotation de sortie des arbres de sortie (20, 22) du différentiel longitudinal (6) qui entraînent un différentiel d'essieu avant (8) et un différentiel d'essieu arrière (10) sont détectées par le biais de capteurs de vitesse de rotation (64, 66).

7. Dispositif pour mettre en oeuvre le procédé selon l'une des revendications précédentes, **caractérisé en ce qu'**il existe un contrôleur électronique (40 ; 40') qui est relié à des capteurs de vitesse de rotation (36 ; 64, 66) des arbres de sortie (20, 22) du différentiel ou du différentiel longitudinal (6), **en ce qu'**un capteur d'angle de rotation (34) de la direction (32) du véhicule automobile est en outre relié au contrôleur (40 ; 40') et **en ce que** les signaux de ces capteurs (36 ; 64, 66) sont comparés et, en présence d'une différence de vitesse de rotation donnée en déplacement rectiligne et sur un intervalle de temps défini, le contrôleur (40; 40') génère un signal d'alerte.

8. Dispositif selon la revendication 7, **caractérisé en ce que** le contrôleur utilisé est un contrôleur électronique (40 ; 40') d'un système de régulation dynamique de la conduite présent dans le véhicule automobile.

9. Dispositif selon la revendication 7 ou 8, **caractérisé en ce que** le différentiel ou le différentiel longitudinal du système d'entraînement est un différentiel Torsen autobloquant (6).
